# EUROPEAN PATENT SPECIFICATION

(11) **EP 1 958 743 B1**
(45) Date of publication and mention of the grant of the patent: **28.09.2011**
(21) Application number: 08250464.8
(22) Date of filing: 07.02.2008
(51) Int. Cl.: B26D 7/06

(54) **Control of food slicing machines**
Steuerung von Nahrungsmittelschneidemaschinen
Commande de trancheuses d'aliments

(30) Priority: 15.02.2007 GB 0702950
(43) Date of publication of application: 20.08.2008
(73) Proprietor: AEW Delford Systems Limited, Norwich NR7 9BB (GB)
(72) Inventor: Culling, Alan, Norwich Norfolk NR12 8AY (GB)
(74) Representative: Sharrock, Daniel John

(56) References cited:
- EP-A- 0 733 446
- DE-A1- 3 010 732
- GB-A- 2 386 317

## Description

### Field of the Invention

This invention relates to the control of food slicing machines, particularly machines which slice food products such as bacon, cheese or cooked meats.

### Background to the Invention

EP-A-0733466 discloses a food slicer in which the food product is fed towards a cutting means by a pair of belt conveyors. A retaining member is provided to hold the trailing end of the food product during a final stage of the slicing process.

In known food slicing machines, gripper apparatus grips the food product and advances it through a slicing blade of the machine. The gripper apparatus then returns to its start position ready to engage the next food product to be sliced. Food products typically have irregular lengths. Slicing machines usually have an adjustable position for the gripper apparatus to return to. However, during a run of food products that position needs to be set to suit the maximum length of product to be sliced. Consequently, on products of shorter length the gripper apparatus undertakes a return stroke which is longer than necessary which increases the reload time.

### Summary of the Invention

According to one aspect of the invention there is provided a food slicing machine having a slicing blade, advancing apparatus mounted in the machine to undergo alternate advancing and return strokes, the advancing apparatus being operable to engage one end of a food product to be sliced and, on an advancing stroke, pushing the food product towards the slicing blade for slicing of the other end of the product, the machine having a sensor operative to produce a sensing signal representative of the position of said one end of the product prior to engagement thereof by the advancing apparatus, and control circuitry for controlling the extent of the return stroke in dependence upon the sensing signal.

The sensor is preferably mounted on the machine so as to be moveable with the gripper apparatus, and the sensor may be mounted on an arm which supports the gripper apparatus in the machine.

The advancing apparatus preferably reciprocates over a bed on which a food product is supported during slicing, the machine also having a waiting area beside the bed for receiving the next food product to be sliced, the sensor being operative to scan the length of the next food product on a return stroke and to produce the sensing signal when the sensor detects said one end of the next food product.

In the preferred embodiment the sensor is a laser sensor and the sensing signal is an electrical signal which is conducted to the control circuitry.

In another aspect the invention provides a method of controlling the movement of advancing apparatus which undergoes alternate advancing and return strokes in a food slicing machine having a slicing blade, the advancing apparatus being operable to engage one end of a food product to be sliced and, on an advancing stroke, push the food product towards the slicing blade for slicing the other end of the product, the method including the steps of:
generating a sensing signal with a sensor which is representative of the position of said one end of the product prior to engagement thereof by the advancing apparatus; and
controlling the extent of the return stroke in dependence upon the sensing signal.

Also disclosed is a method of controlling the movement of advancing apparatus which undertakes alternate advancing and return strokes in a food slicing machine having a slicing blade, the advancing apparatus pushing the trailing end of a food product towards the slicing blade on an advancing stroke and then undergoing a return stroke ready to engage the trailing end of the next food product to be sliced, the method including predicting the location of the trailing end of the next food product and using this prediction to control the position at which the advancing apparatus commences its next advancing stroke.

The advancing apparatus may commence its next advancing stroke by a predetermined distance beyond the predicted location of the trailing end of the next food product, and this predicted distance is conveniently between 15mm and 25mm, most preferably about 20mm.

The advancing apparatus preferably forms part of gripper apparatus which engages and grips said one end of the food product

### Brief Description of the Drawings

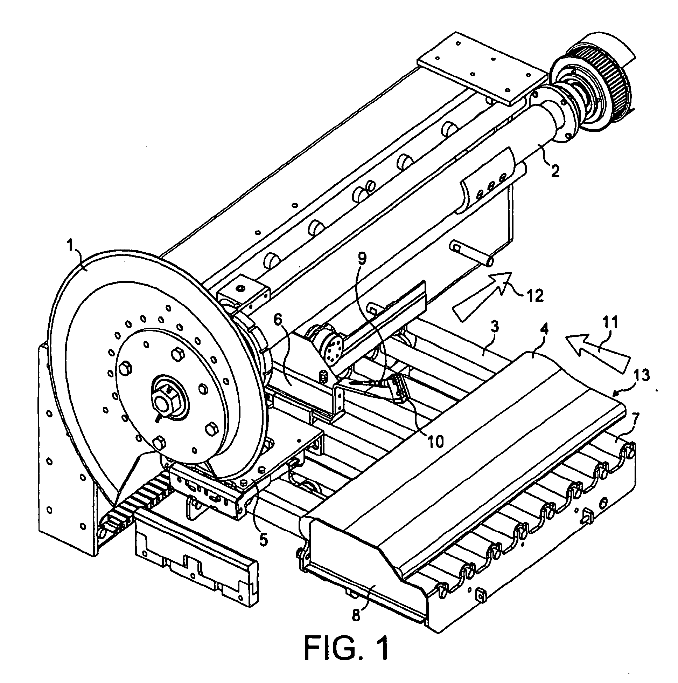

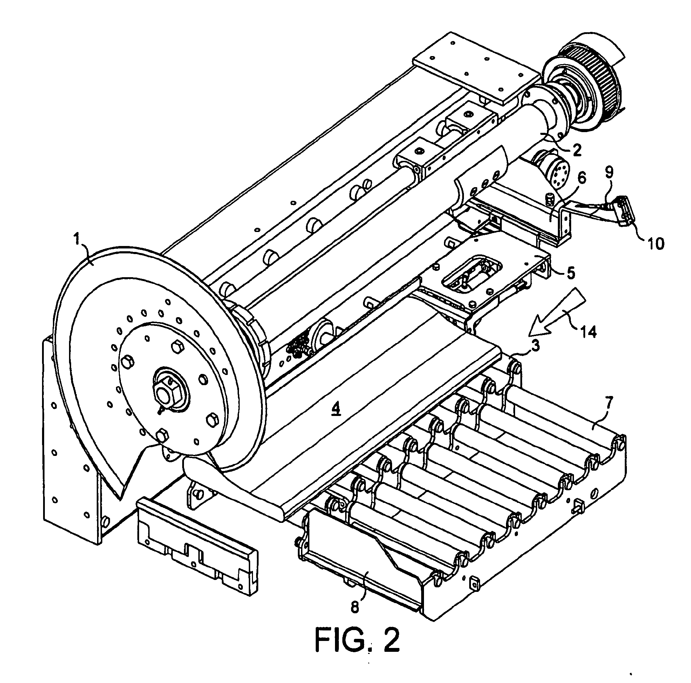

The invention will now be further described, by way of example, with reference to the accompanying drawings in which Figures 1 and 2 are isometric views of a food slicing machine according to the invention, Figure 1 showing the machine with a gripper apparatus on a return stroke and Figure 2 showing the machine with the gripper apparatus at the commencement of the next advancing stroke.

### Detailed Description of the Drawings

The machine has a slicing blade 1 rotatably driven by a drive shaft 2 positioned above a series of parallel rollers forming a bed 3 for supporting a food product, in this case a log of bacon 4, to be sliced. The bed 3 is inclined downwardly towards the blade 1.

A gripper 5 is carried by a horizontally projecting arm 6 which reciprocates above the bed 3, causing the gripper apparatus 5 to undertake alternate advancing and return strokes. Beside the bed 3 is a waiting area 7 defined by a further set of parallel rollers. The waiting area 7 is inclined to the horizontal at an angle matching the inclination of the bed 3, and an end plate 8 is positioned at the lower end of the waiting area 7. A bacon log 4 to be sliced is first placed on the waiting area 7, with the forward end of the log 4 resting on the plate 8, and this log remains on the waiting area 7 until slicing of the preceding log has been completed. This is the position illustrated in Figure 1.

The arm 6 carries a projecting finger 9 the extremity of which has a laser sensor 10 positioned so as to scan the upper surface of the bacon log 4 as the gripper apparatus 5 undergoes a return stroke. The laser source 10 is electrically connected to control circuitry of the machine so that an electrical output signal from the laser source 10 controls the amplitude of the return stroke of the gripper apparatus in the following manner. In Figure 1, the gripper apparatus is commencing its return stroke in the direction of arrow 12, and the sensor 10 is sensing the upper surface of the bacon log 4 as the sensor 10 moves over it. When the sensor 10 detects the trailing end 13 of the bacon log 4, the sensor 10 produces an electrical signal which causes the control circuitry to bring the gripper apparatus 5 to the end of its return or retracting stroke at a position about 20mm beyond the predicted position of the trailing end of the log. Thus, when the log 4 is moved (arrow 11, Figure 1) from the waiting area 7 onto the bed 3 by a loading arm (not shown), the gripper apparatus 5 is spaced 20mm from the trailing end of the log and this is the position shown in Figure 2. After this, the gripper apparatus 5 grasps the trailing end of the log 4 and commences its advancing stroke in the direction of arrow and pushes the log 4 towards the slicing blade 1. After slicing of the log 4, the gripper apparatus 5 undergoes a return stroke and the sensor 10 scans the next log on the waiting area 7.

The prediction of the position of the trailing end of the log avoids unnecessary movement of the gripper apparatus so that the bacon log can be lowered into the machine and slicing can commence with minimum wasted time and effort.

## Claims

1. A food slicing machine having a slicing blade (1), advancing apparatus (5, 6) mounted in the machine to undergo alternate advancing and return strokes, the advancing apparatus being operable to engage one end (13) of a food product (4) to be sliced and, on an advancing stroke, push the food product towards the slicing blade (1) for slicing of the other end of the product, **characterised by** the machine having a sensor (10) operative to produce a sensing signal representative of the position of said one end (13) of the product prior to engagement thereof by the advancing apparatus, and control circuitry for controlling the extent of the return stroke in dependence upon the sensing signal.

2. A food slicing machine according to claim 1, wherein the sensor (10) is mounted on the machine so as to be moveable with the advancing apparatus (6).

3. A food slicing machine according to claim 2, wherein the sensor (10) is mounted on an arm (6) which supports the advancing apparatus in the machine.

4. A food slicing machine according to claim 3, wherein the advancing apparatus (5, 6) reciprocates over a bed (3) on which a food product (4) is supported during slicing, the machine also having a waiting area (7) beside the bed for receiving the next food product to be sliced, the sensor (10) being operative to scan the length of the next food product on a return stroke and to produce the sensing signal when the sensor (10) detects said one end of the next food product.

5. A food slicing machine according to any of the preceding claims, wherein the sensor (10) is a laser sensor.

6. A food slicing machine according to any of the preceding claims, wherein the advancing apparatus (5, 6) forms part of gripper apparatus (5) which engages and grips said one end of the food product.

7. A method of controlling the movement of advancing apparatus (5, 6) which undergoes alternate advancing and return strokes in a food slicing machine having a slicing blade (1), the advancing apparatus (5, 6) being operable to engage one end (13) of a food product (4) to be sliced and, on an advancing stroke, push the food product towards the slicing blade (1) for slicing the other end of the product, **characterised in that** the method includes the steps of:
generating a sensing signal with a sensor (10) which is representative of the position of said one end of the product prior to engagement thereof by the advancing apparatus; and
controlling the extent of the return stroke in dependence upon the sensing signal.

8. A method according to claim 7, wherein the extent of the return stroke is controlled such that the advancing apparatus is moved to a position a predetermined distance beyond where said one end of the product is located when it is loaded in position ready for slicing by the machine.

9. A method according to claim 8, wherein the predetermined distance is between 15mm and 25mm.

10. A method according to any of claims 7 to 9, wherein the trailing end of the next food product is engaged and gripped at the commencement of an advancing stroke.

## Patentansprüche

1. Scheibenschneidmaschine für Nahrungsmittel mit einer Scheibenschneidklinge (1) und einer Vorschubvorrichtung (5, 6), die in der Maschine montiert ist, um abwechselnde Vorschub- und Rückhübe mitzumachen, wobei die Vorschubvorrichtung dahingehend betätigbar ist, ein Ende (13) eines in Scheiben zu schneidenden Nahrungsmittelprodukts (4) in Eingriff zu nehmen und bei einem Vorschubhub das Nahrungsmittelprodukt zur Scheibenschneidklinge (1) hin zu schieben, um das andere Ende des Produkts in Scheiben zu schneiden, **dadurch gekennzeichnet, dass** die Maschine einen Sensor (10), der dahingehend wirksam ist, ein Erfassungssignal zu erzeugen, das für die Position des einen Endes (13) des Produkts repräsentativ ist, bevor dieses von der Vorschubvorrichtung in Eingriff genommen wird, und eine Steuerschaltungsanordnung hat, um die Erstreckung des Rückhubs abhängig vom Erfassungssignal zu steuern.

2. Scheibenschneidmaschine für Nahrungsmittel nach Anspruch 1, wobei der Sensor (10) so an der Maschine montiert ist, dass er mit der Vorschubvorrichtung (6) bewegbar ist.

3. Scheibenschneidmaschine für Nahrungsmittel nach Anspruch 2, wobei der Sensor (10) an einem Arm (6) montiert ist, der die Vorschubvorrichtungen in der Maschine stützt.

4. Scheibenschneidmaschine für Nahrungsmittel nach Anspruch 3, wobei die Vorschubvorrichtung (5, 6) über einem Bett (3) hin- und hergeht, auf dem ein Nahrungsmittelprodukt (4) gestützt wird, während es in Scheiben geschnitten wird, wobei die Maschine neben dem Bett auch einen Wartebereich (7) zur Aufnahme des nächsten in Scheiben zu schneidenden Nahrungsmittelprodukts hat, wobei der Sensor (10) dahingehend wirksam ist, die Länge des nächsten Nahrungsmittelprodukts bei einem Rückhub zu scannen und das Erfassungssignal zu erzeugen, wenn der Sensor (10) das eine Ende des nächstens Nahrungsmittelprodukts erfasst.

5. Scheibenschneidmaschine für Nahrungsmittel nach einem der vorhergehenden Ansprüche, wobei der Sensor (10) ein Lasersensor ist.

6. Scheibenschneidmaschine für Nahrungsmittel nach einem der vorhergehenden Ansprüche, wobei die Vorschubvorrichtung (5, 6) Teil einer Greifervorrichtung (5) bildet, die das eine Ende des Nahrungsmittelprodukts in Eingriff nimmt und ergreift.

7. Verfahren zur Steuerung der Bewegung der Vorschubvorrichtung (5, 6), die abwechselnde Vorschub- und Rückhübe in einer Scheibenschneidmaschine für Nahrungsmittel mit einer Scheibenschneidklinge (1) mitmacht, wobei die Vorschubvorrichtung (5, 6) dahingehend betätigbar ist, ein Ende (13) eines in Scheiben zu schneidenden Nahrungsmittelprodukts (4) in Eingriff zu nehmen und bei einem Vorschubhub das Nahrungsmittelprodukt zur Scheibenschneidklinge (1) hin zu schieben, um das andere Ende des Produkts in Scheiben zu schneiden, **dadurch gekennzeichnet, dass** das Verfahren die folgenden Schritte aufweist:
Erzeugen eines Erfassungssignals mit einem Sensor (10), das für die Position des einen Endes des Produkts repräsentativ ist, bevor dieses von der Vorschubvorrichtung in Eingriff genommen wird, und
Steuern der Erstreckung des Rückhubs abhängig vom Erfassungssignal.

8. Verfahren nach Anspruch 7, wobei die Erstreckung des Rückhubs so gesteuert wird, dass die Vorschubvorrichtung in eine Position in einem vorbestimmten Abstand jenseits der Stelle bewegt wird, an der sich das eine Ende des Produkts befindet, wenn es in die Position geladen wird, in der es bereit ist, von der Maschine in Scheiben geschnitten zu werden.

9. Verfahren nach Anspruch 8, wobei der Vorbestimmte Abstand zwischen 15 mm und 25 mm liegt.

10. Verfahren nach einem der Ansprüche 7 bis 9, wobei das hintere Ende des nächsten Nahrungsmittelprodukts zu Beginn eines Vorschubhubs in Eingriff genommen und ergriffen wird.

## Revendications

1. Machine de tranchage d'aliments comportant une lame de tranchage (1), et un appareil d'avance (5, 6) monté dans la machine pour subir des courses d'avance et de retour alternées, l'appareil d'avance pouvant être actionné pour engager une extrémité (13) d'un produit alimentaire (4) à trancher et, lors d'une course d'avance, pousser le produit alimentaire vers la lame de tranchage (1) afin de trancher l'autre extrémité du produit, **caractérisée en ce que** la machine possède un détecteur (10) fonctionnant de façon à produire un signal de détection représentatif de la position de ladite une extrémité (13) du produit préalablement à l'engagement de cette dernière par l'appareil d'avance, et un circuit de commande pour commander l'étendue de la course de retour en fonction du signal de détection.

2. Machine de tranchage d'aliments selon la revendication 1, dans laquelle le détecteur (10) est monté sur la machine de manière à pouvoir être déplacé avec l'appareil d'avance (6).

3. Machine de tranchage d'aliments selon la revendication 2, dans laquelle le détecteur (10) est monté sur un bras (6) qui supporte l'appareil d'avance dans la machine.

4. Machine de tranchage d'aliments selon la revendication 3, dans laquelle l'appareil d'avance (5, 6) effectue un mouvement de va-et-vient au-dessus d'un lit (3) sur lequel un produit alimentaire (4) est supporté au cours du tranchage, la machine possédant également une zone d'attente (7) à côté du lit destinée à recevoir le produit alimentaire suivant à trancher, le détecteur (10) fonctionnant de façon à scanner la longueur du produit alimentaire suivant lors d'une course de retour et à produire le signal de détection lorsque le détecteur (10) détecte ladite une extrémité du produit alimentaire suivant.

5. Machine de tranchage d'aliments selon l'une quelconque des revendications précédentes, dans laquelle le détecteur (10) est un détecteur laser.

6. Machine de tranchage d'aliments selon l'une quelconque des revendications précédentes, dans laquelle l'appareil d'avance (5, 6) fait partie d'un appareil de préhension (5) qui engage et saisit ladite une extrémité du produit alimentaire.

7. Procédé de commande du déplacement de l'appareil d'avance (5, 6) qui subit des courses d'avance et de retour alternées dans une machine de tranchage d'aliments possédant une lame de tranchage (1), l'appareil d'avance (5, 6) pouvant être actionné pour engager une extrémité (13) d'un produit alimentaire (4) à trancher et, lors d'une course d'avance, pousser le produit alimentaire vers la lame de tranchage (1) afin de trancher l'autre extrémité du produit, **caractérisé en ce que** le procédé comprend les étapes consistant à :
générer, avec un détecteur (10), un signal de détection qui est représentatif de la position de ladite une extrémité du produit préalablement à l'engagement de cette dernière par l'appareil d'avance ; et
commander l'étendue de la course de retour en fonction du signal de détection.

8. Procédé selon la revendication 7, dans lequel l'étendue de la course de retour est commandée de telle sorte que l'appareil d'avance soit déplacé jusqu'à une position qui se trouve à une distance prédéterminée au-delà de l'endroit où ladite une extrémité du produit est située lorsque ce dernier est chargé en position, prêt à être tranché par la machine.

9. Procédé selon la revendication 8, dans lequel la distance prédéterminée se situe entre 15 mm et 25 mm.

10. Procédé selon l'une quelconque des revendications 7 à 9, dans lequel l'extrémité arrière du produit alimentaire suivant est engagée et saisie au début d'une course d'avance.
